# EUROPEAN PATENT APPLICATION

(11) **EP 0 976 654 A1**
(43) Date of publication of application: **02.02.2000**
(21) Application number: 99114522.8
(22) Date of filing: 23.07.1999
(51) Int. Cl.: B64D 47/06, B64C 27/04

(54) **Helicopter landing lights assembly**

(30) Priority: 31.07.1998 IT TO980674
(71) Applicant: FINMECCANICA S.p.A., 00195 Roma (IT)
(72) Inventor: Caporaletti, Amedeo, 31021 Mogliano Veneto (IT)
(74) Representative: Cerbaro, Elena, Dr.

(57) **Abstract**

A helicopter (1) having a fuselage (2); two central main undercarriages (6) carried by respective lateral supporting brackets (10) projecting from the fuselage (2); a front secondary undercarriage (8); and two landing light assemblies (15) carried by respective lateral supporting brackets (10).

## Description

The present invention relates to a helicopter of the type comprising a fuselage; a main rotor fitted to the top of a central portion of the fuselage; a secondary tail rotor; two central main undercarriages with respective retractable landing wheels; a front secondary undercarriage with a retractable landing wheel; and a number of landing lights normally comprising main, taxiing and position lights.

The landing lights are normally fitted to the front of the helicopter, on the nose of the fuselage or on the secondary undercarriage, which poses problems as regards the location, on the front portion of the helicopter, of an increasing number of flight accessories, such as searchlights, meteo radar, etc.

It is an object of the present invention to provide a helicopter, the landing lights of which are located in functionally consistent locations, while at the same time enabling appropriate location of the aforementioned flight accessories.

According to the present invention, there is provided a helicopter comprising a fuselage; two central main undercarriages carried by respective lateral supporting brackets projecting from said fuselage; a front secondary undercarriage; and landing lighting means; characterized in that said landing lighting means comprise two landing light assemblies carried by respective said lateral supporting brackets.

A preferred, non-limiting embodiment of the present invention will be described by way of example with reference to the accompanying drawings, in which:
Figure 1 shows a view in perspective of a helicopter in accordance with the present invention;
Figure 2 shows a top plan view of a detail of the Figure 1 helicopter;
Figure 3 shows a section along line III-III in Figure 2;
Figure 4 shows a section along line IV-IV in Figure 2.

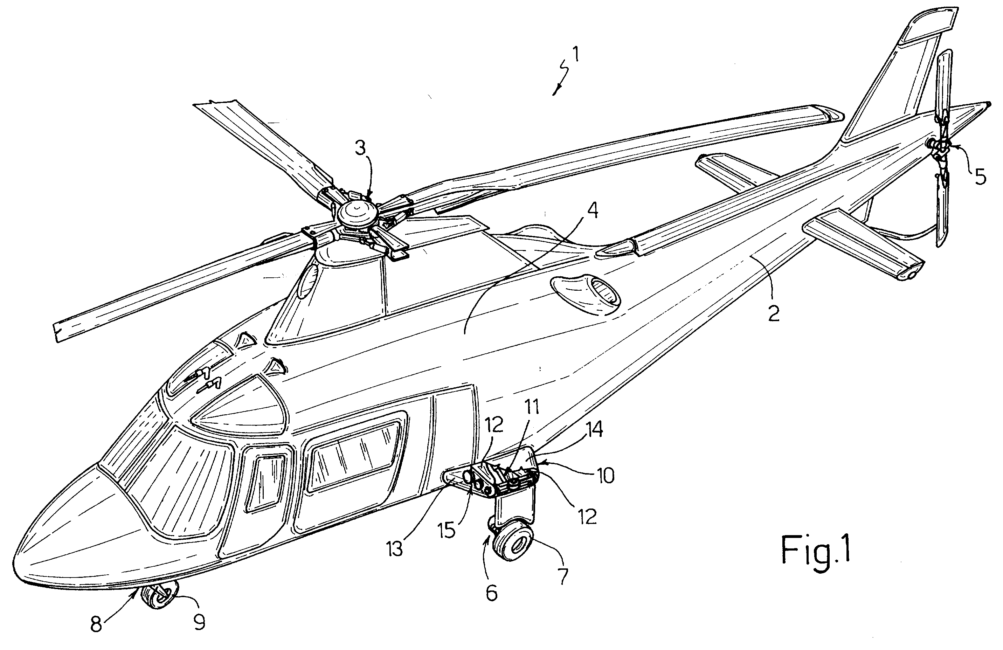

Number 1 in Figure 1 indicates as a whole a helicopter in accordance with the present invention.

Helicopter 1 substantially comprises a fuselage 2; a main rotor 3 fitted to the top of a central portion 4 of fuselage 2; a secondary tail rotor 5; two central main undercarriages 6 with respective retractable landing wheels 7; and a front secondary undercarriage 8 with a retractable landing wheel 9.

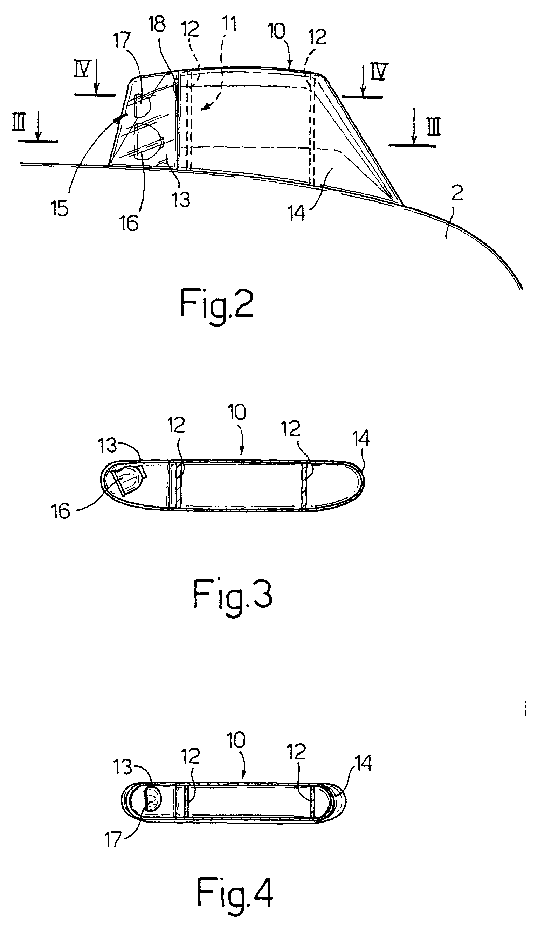

More specifically, main undercarriages 6 are carried by respective lateral supporting brackets 10 projecting from fuselage 2 (Figures 2 to 4). Each lateral bracket 10 has a streamlined structure, and comprises a substantially rectangular inner frame 11 defined by two longitudinal members 12 supporting the relative main undercarriage 6 and projecting from fuselage 2; and frame 11 of each lateral bracket 10 is covered externally with a front fairing 13 and a rear fairing 14, which, viewed from above, define a substantially trapezoidal bracket profile with rounded vertices and a slightly convex outer longitudinal side (Figure 2).

Helicopter 1 also comprises two landing light assemblies 15, each of which, according to the present invention, is advantageously carried by a respective lateral bracket 10.

More specifically, each light assembly 15 is housed in front fairing 13 of respective lateral bracket 10, for which purpose, the front fairing is transparent.

In the example shown, each light assembly 15 comprises a main light 16, preferably tilted downwards with respect to the horizontal (Figures 2 and 3); a taxiing light 15 (Figures 2 and 4); and a position light 18 (Figure 2). Lights 16, 17 and 18 are arranged in succession from fuselage 2 outwards of relative lateral bracket 10.

The advantages of helicopter 1 according to the present invention will be clear from the foregoing description.

In particular, locating landing lights 16, 17, 18 on lateral brackets 10 of helicopter 1 involves no additional cost, other than providing a transparent front fairing 13; involves no structural alterations to brackets 10; and makes space available at the front of helicopter 1 for flight accessories such as searchlights or meteo radar.

Clearly, changes may be made to helicopter 1 as described and illustrated herein without, however, departing from the scope of the accompanying Claims.

## Claims

1. A helicopter (1) comprising a fuselage (2); two central main undercarriages (6) carried by respective lateral supporting brackets (10) projecting from said fuselage (2); a front secondary undercarriage (8); and landing lighting means (15); characterized in that said landing lighting means comprise two landing light assemblies (15) carried by respective said lateral supporting brackets (10).

2. A helicopter as claimed in Claim 1, characterized in that each said lateral supporting bracket (10) comprises an inner frame (11) supporting the respective main undercarriage (6) and covered externally with a transparent front fairing (13) and a rear fairing (14); and in that each said landing light assembly (15) is housed inside said front fairing (13) of the respective said lateral supporting bracket (10).

3. A helicopter as claimed in Claim 1 or 2, characterized in that each said landing light assembly (15) comprises a main light (16).

4. A helicopter as claimed in any one of the foregoing Claims, characterized in that each said landing light assembly (15) comprises a taxiing light (17).

5. A helicopter as claimed in any one of the foregoing Claims, characterized in that each said landing light assembly (15) comprises a position light (18).
